# EUROPEAN PATENT SPECIFICATION

(11) **EP 0 779 322 B1**
(45) Date of publication and mention of the grant of the patent: **28.02.2001**
(21) Application number: 96118677.2
(22) Date of filing: 21.11.1996
(51) Int. Cl.: C08J 3/12, C08J 3/20

(54) **Composite cured silicone powder and method for the preparation thereof**
Vernetztes Silikon-Verbundpulver und dessen Herstellungsverfahren
Poudre de silicone réticulée composite et procédé pour la préparer

(30) Priority: 30.11.1995 JP 33611195
(43) Date of publication of application: 18.06.1997
(73) Proprietor: Dow Corning Toray Silicone Company Ltd., Tokyo (JP)
(72) Inventor: Morita, Yoshitsuga, Dow Corning Toray Sil. Co, Ltd, Ichihara-shi, Chiba Prefecture (JP); Sasaki, Atsushi, Dow Corning Toray Sil. Co, Ltd, Ichihara-shi, Chiba Prefecture (JP)
(74) Representative: Fleischer, Holm Herbert, Dr.

(56) References cited:
- EP-A- 0 516 057
- EP-A- 0 548 969
- EP-A- 0 647 672
- EP-A- 0 685 508
- US-A- 3 691 128
- US-A- 5 153 238
- W. NOLL, CHEMISTRY AND TECHNOLOGY OF SILICONES (1968) ACADEMIC PRESS, NEW YORK, p 443

## Description

This invention relates to composite cured silicone powders comprising a cured silicone powder whose surface is coated with microfine inorganic powders, and to methods for the preparation thereof. This invention provides a very flowable and strongly water repellent composite of cured silicone powder and a method for the preparation of this composite cured silicone powder.

Cured silicone powders are used as additives in, for example, cosmetics, paints, inks, thermosetting organic resins, and thermoplastic organic resins. Cured silicone powders are suited for use as internal stress relaxers for thermosetting organic resins, and as surface lubricants for organic resin films.

Cured silicone powders are produced, for example, by grinding silicone rubber, by curing a liquid silicone rubber composition while spray drying (JP-A 59-68333), and by curing a liquid silicone rubber composition while dispersed in water (JP-As 62-243621, 63-77942, 63-202658, and 64-70558). However, the cured silicone powders afforded by these methods have a strong tendency to aggregate, and as a result, have a poor flowability. Further, they are not uniformly dispersed in organic resins, e.g., thermosetting organic resins and thermoplastic organic resins.

Composite cured silicone powders with an improved flowability have been proposed to solve these problems. These composites comprise a cured silicone powder whose surface has been coated with a microfine inorganic powder (JP-A 4-348143, 5-179144, and 7-102075). These powders, however, exhibit a poor water repellency and have a poor affinity for organic resins where they are blended therewith.

The object of the present invention is to provide a very flowable and highly water repellent composite cured silicone powder and a method for its preparation.

The composite cured silicone powder of this invention comprises cured silicone powder that has an average particle size from 0.1 to 100 micrometers and contains non-crosslinking silicone oil, the surface of which is coated with a microfine inorganic powder having a particle size not exceeding one-tenth of the average particle size of the cured silicone powder. Preferably a polydimethylsiloxane rubber and a polydimethyl siloxane oil is used.

In addition, our method for preparation of this composite cured silicone powder comprises mixing cured silicone powder that has an average particle size from 0.1 to 100 micrometers and contains non-crosslinking silicone oil with microfine inorganic powder having a particle size not exceeding one-tenth of the average particle size of the cured silicone powder under mechanical shear.

The composite cured silicone powder of the claimed invention is a cured silicone powder whose surface is coated with a microfine inorganic powder having a particle size not exceeding one-tenth of the average particle size of the cured silicone powder. The average particle size of the cured silicone powder is from 0.1 to 100 micrometers, and preferably is from 0.5 to 80 micrometers. Coating the surface of this powder with inorganic powder becomes highly problematic when its average particle size is below 0.1 micrometer. Contrastingly, composite powders prepared from cured silicone powder having an average particle size above 100 micrometers is not readily dispersible in organic resins.

The cured silicone powder is, for example, from a silicone gel, a silicone rubber, or a silicone resin, wherein silicone rubber powder is particularly preferred. The cured silicone powder is cured, for example, by addition reaction, condensation reaction, organoperoxide and ultraviolet radiation. Particularly preferred are cured silicone powders of addition or condensation reactions. The physical properties of these powders are not critical, but the JIS (Japanese Industrial Standard) A durometer hardness preferably does not exceed 50.

The non-crosslinking silicone oil present in our cured silicone powder simply has not participated in the curing reaction that generated the bared silicone powder. The molecular structure of the non-crosslinking silicone oil is straight chain, partially branched straight chain, cyclic or branched chain, with straight-chain structures preferred.

The viscosity at 25°C of this non-crosslinking silicone oil is from 1 to 10,000 mPa.s (centipoise), and preferably from 5 to 1,000 mPa.s (centipoise). When this non-crosslinking silicone oil has a viscosity of less than 1 mPa.s (centipoise) at 25°C, the volatility of the silicone oil will substantially prevent a durable water repellency from being imparted to the resulting composite. At the other end, it becomes difficult to make cured silicone powder with an average particle size no greater than 100 micrometers when the non-crosslinking silicone oil has a viscosity at 25°C in excess of 10,000 mPa.s (centipoise).

The non-crosslinking silicone oil is exemplified by trimethylsiloxy-endblocked dimethylpolysiloxanes, trimethylsiloxy-endblocked dimethylsiloxane-methylphenylsiloxane copolymers, and trimethylsiloxy-endblocked dimethylsiloxane-methyl(3,3,3-trifluoropropyl)siloxane copolymers. When our cured silicone powder is obtained by an addition reaction cure, the non-crosslinking silicone oil can also be, for example, silanol-endblocked dimethylpolysiloxanes, silanol-endblocked dimethylsiloxane-methylphenylsiloxane copolymers, and silanol-endblocked dimethylsiloxane-methyl(3,3,3-trifluoropropyl)siloxane copolymers. When our cured silicone powder is obtained through a condensation reaction cure, the non-crosslinking silicone oil can also be, for example, dimethylvinylsiloxy-endblocked dimethylpolysiloxanes, dimethylvinylsiloxy-endblocked dimethylsiloxane-methylphenylsiloxane copolymers, dimethylvinylsiloxy-endblocked dimethylsiloxanemethyl(3,3,3-trifluoropropyl)siloxane copolymers, trimethylsiloxy-endblocked methylvinylpolysiloxanes, and trimethylsiloxy-endblocked dimethylsiloxanemethylvinylsiloxane copolymers.

The content of the non-crosslinking silicone oil in our cured silicone powder is preferably from 0.5 to 80 weight%, and more preferably from 10 to 50 weight%. Little water repellency is imparted to the ultimately obtained composite of cured silicone powder when the cured silicone powder contains less than 0.5 weight% non-crosslinking silicone oil. When the non-crosslinking silicone oil content exceeds 80 weight%, it has a pronounced tendency to bleed from the corresponding composite of cured silicone powder.

Our cured silicone powder containing non-crosslinking silicone oil is prepared, for example, by curing a curable silicone composition, and by then pulverizing the cured silicone with a device such as a grinder. Alternatively, it is prepared by curing a curable silicone composition by spraying it-in a device such as a spray dryer. Finally, it is prepared by curing a curable silicone composition while it is dispersed in water or an aqueous surfactant solution. The curable silicone composition used in these methods is exemplified by the following: addition reaction-curing silicone compositions comprising organopolysiloxane having at least 2 alkenyl groups in each molecule, organopolysiloxane having at least 2 silicon-bonded hydrogen atoms in each molecule, non-crosslinking silicone oil, and a platinum compound; condensation reaction-curing silicone compositions comprising organopolysiloxane having at least 2 silicon-bonded hydroxyl or hydrolyzable groups, wherein said hydrolyzable groups are exemplified by alkoxy, oxime, acetoxy, and aminoxy, plus silane crosslinker having at least 3 silicon-bonded hydrolyzable groups in each molecule, wherein said hydrolyzable groups are also exemplified by alkoxy, oxime, acetoxy, and aminoxy, non-crosslinking silicone oil, and a condensation reaction catalyst such as an organotin or organotitanium compound; and organoperoxide-curing silicone compositions comprising diorganopolysiloxane having at least one alkenyl group in each molecule, non-crosslinking silicone oil, and organoperoxide.

Among the preceding methods, it is particularly preferred that the curable silicon composition is dispersed in water or aqueous surfactant solution for obtaining spherical cured silicone powder composites that are highly dispersible in organic resins. A non-crosslinking silicone oil-free cured silicone powder, prepared by this method, will generally be hydrophilic since it is prepared in water and has surfactant adhering to it. Its surface is then coated with microfine inorganic powder, but it still has problems in the manifestation of water repellency. However, this latter method remains the preferred method for preparing a cured silicone powder because a strong water repellency is still imparted to the composite cured silicone powder.

The waterborne dispersion of our curable silicone composition is prepared, for example, using an agitating device such as a homogenizer or colloid mill, and/or a mixer such as an ultrasound vibrator. In this sequence, the curable silicone composition is preferably cooled before preparation of the waterborne dispersion to inhibit or control its cure. The use of an aqueous surfactant solution is preferred to stabilize the curable silicone composition in particulate form within the waterborne dispersion. The surfactant is preferably added at a level of 0.1 to 20 weight parts, preferably 0.5 to 10 weight parts, per 100 weight parts of the curable silicone composition. The water is preferably used at from 40 to 2,000 weight parts, preferably 40 to 1,000 weight parts, per 100 weight parts of the curable silicone composition. The preparation of a homogeneous waterborne dispersion of the curable silicone composition becomes quite problematic when the water is used at less than 40 weight parts. On the other hand, the use of more than 2,000 weight parts of water leads to a substantial decline in productivity of the cured silicone powder. The water used is preferably ion-exchanged water that contains minimal metal ion or halogen ion, and has a conductivity not exceeding 1 microS/cm. Preferably, the conductivity does not exceed 0.5 microS/cm. The use of such an ion-exchanged water also facilitates stabilization of the waterborne dispersion of our curable silicone composition.

The waterborne dispersion of our curable silicone composition is then held at room or elevated temperature to cure the silicone composition present and to provide a waterborne dispersion of cured silicone powder. When heating is applied, the heating temperature does not exceed 100°C, and preferably is from 10 to 95°C. Heat is applied to the waterborne dispersion of curable silicone composition, for example, by the direct application of heat or by adding the dispersion to hot water. The cured silicone powder is then recovered by elimination of the water. The water is removed from the dispersion of the cured silicone powder using a vacuum dryer, a forced convection oven, or a spray dryer.

The inorganic powder for coating on the surface of our resulting cured silicone powder is exemplified by the microfine powders of metal oxides such as silicon, titanium, aluminum, zirconium, and antimony; the microfine powders of metal nitrides such as boron or aluminum; and by microfine sulfide or chloride powders. Microfine metal oxide powders are preferred. Moreover, the surface of the microfine inorganic powder can be hydrophobicized by treatment with an organosilicon compound such as an organoalkoxysilane, organochlorosilane, and organosilazane.

The microfine inorganic powder has a particle size appropriate for coating the surface of our cured silicone powder; and in specific terms, it has a particle size not exceeding one-tenth of the average particle size of the cured silicone powder. Preferably, it has a specific surface area of at least 10 m²/g.

The preparative method of the present invention mixes a non-crosslinking silicone oil within a cured silicone powder of an average particle size of 0.1 to 100 micrometers with a microfine inorganic powder under mechanical shear. The device for mixing these powders is exemplified by the Henschel ™ mixer and a super mixer. The temperature during mixing is not critical, and mixing is normally conducted, for example, at room temperature. Since flowability is being imparted to poorly flowable cured silicone powders by surface coating with microfine inorganic powder, the suitable mixing time is determined by periodically inspecting the change in the status of the cured silicone powder.

The microfine inorganic powder is added in our preparative method in a quantity sufficient to coat the surface of the cured silicone powder. Although this quantity will also vary as a function of the non-crosslinking silicone oil content of the cured silicone powder, additions of 0.1 to 100 weight parts, per 100 weight parts of the cured silicone powder, are typical. Additions of 1 to 50 weight parts, per 100 weight parts of cured silicone powder, are preferred.

The composite cured silicone powders of this invention exhibit an excellent flowability, and a strong water repellency. As a consequence, they surprisingly exhibit excellent affinity for, and dispersibility in, organic compounds and organic resins. Our composite cured silicone powder is therefore used as an additive or modifier for paints, organic resins, cosmetics, and inks.

### Examples

Our composite cured silicone powder and its method of preparation will now be explained in greater detail with reference to working examples. The viscosity values reported in the examples were measured at 25°C. The properties of the cured silicone powders, and the composite cured silicone powders, were measured as follows.

### JIS A durometer hardness of the cured silicone powders

The curable silicone composition was cured into a sheet, and the durometer hardness, A scale, of this sheet was measured using JIS K-6301.

### Average particle size

The average particle size of the cured silicone powder was measured using an image processor connected to an optical microscope.

### Flowability

This property was evaluated by measuring the weight% powder (cured silicone powder or composite cured silicone powder) retained on the mesh using an Air-Jet Sieve™ from the Alpine Company and a 100-mesh sieve drum (mesh opening = 150 micrometers).

### Water repellency

One gram of the cured silicone powder, or composite cured silicone powder, was introduced into 100 mL of water and mixed with a stirrer. A score of " + " for water repellent property was rendered when the cured silicone powder, or composite cured silicone powder, was incompatible with water and floated on its surface. A score of " x " for hydrophilic was reported when the sample was compatible with water and settled or became suspended within the water.

### Reference Example 1

A composition (I) was prepared by mixing the following to homogeneity: 28 weight parts of dimethylvinylsiloxy-endblocked dimethylpolysiloxane with a vinyl equivalent weight of 8,000, 7 weight parts of dimethylhydrogensiloxy-endblocked dimethylsiloxane-methylhydrogensiloxane copolymer with a viscosity of 20 mPa.s (centipoise) having the following formula 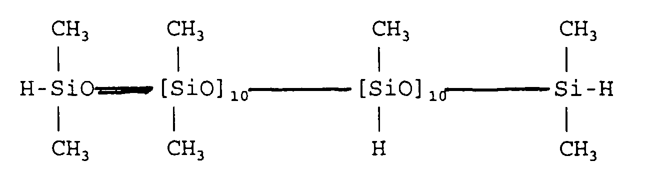 and 15 weight parts of trimethylsiloxy-endblocked dimethylpolysiloxane with a viscosity of 100 mPa.s (centipoise).

A composition (II) was prepared by mixing the following to homogeneity: 33 weight parts of the above-described dimethylvinylsiloxy-endblocked dimethylpolysiloxane, 16 weight parts of trimethylsiloxy-endblocked dimethylpolysiloxane with a viscosity of 100 mPa.s (centipoise), and isopropanolic chloroplatinic acid solution in sufficient quantity to give 20 weight-ppm of platinum metal, per 100 weight parts of the dimethylvinylsiloxy-endblocked dimethylpolysiloxane.

Compositions (I) and (II) were then mixed in their entirety to homogeneity at 5°C to give a silicone rubber composition, which was quickly mixed into an aqueous solution (25°C) of 200 weight parts of pure water (electrical conductivity = 0.2 microS/cm) and 4 weight parts of polyoxyethylene nonylphenyl ether (HLB = 13.1). Mixing this in a homogenizer (300 kgf/cm²) yielded a homogeneous waterborne emulsion of the silicone rubber composition. This waterborne emulsion of silicone rubber was held at 30°C for 6 hours to effect curing and to give a waterborne dispersion of silicone rubber powder. This waterborne dispersion was then heated at 80°C for 1 hour and dried in a spray dryer to give a spherical silicone rubber powder (A) that had an average particle size of 5 micrometers. Silicone rubber powder (A) had a JIS A durometer hardness of 20.

### Reference Example 2

A composition (III) was prepared by mixing the following to homogeneity: 20 weight parts of dimethylvinylsiloxy-endblocked dimethylpolysiloxane with a vinyl equivalent weight of 4,000, 11 weight parts of dimethylhydrogensiloxy-endblocked dimethylsiloxane-methylhydrogensiloxane copolymer with a viscosity of 20 mPa.s (centipoise) having the following formula 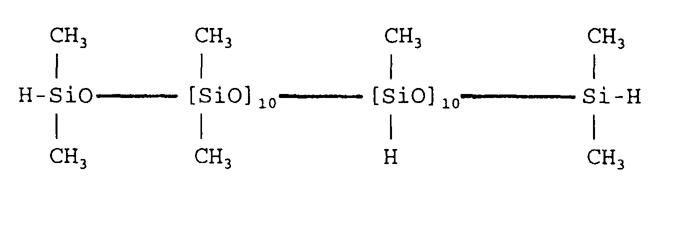 and 30 weight parts of trimethylsiloxy-endblocked dimethylpolysiloxane with a viscosity of 30 mPa.s (centipoise).

A composition (IV) was prepared by mixing the following to homogeneity: 50 weight parts of the above dimethylvinylsiloxy-endblocked dimethylpolysiloxane and an isopropanolic chloroplatinic acid solution in sufficient quantity to give 20 weight-ppm of platinum metal, per 100 weight parts of the dimethylvinylsiloxy-endblocked dimethylpolysiloxane.

Compositions (III) and (IV) were then mixed in their entirety to homogeneity at 5°C to give a silicone rubber composition, which was quickly mixed into an aqueous solution (25°C) of 200 weight parts of pure water (electrical conductivity = 0.2 microS/cm) and 4 weight parts of polyoxyethylene nonylphenyl ether (HLB = 13.1). Mixing this in a homogenizer (300 kgf/cm²) yielded a homogeneous waterborne emulsion. This waterborne emulsion was held at 30°C for 6 hours to effect cure and to give a waterborne dispersion of a silicone rubber powder. This dispersion of of silicone rubber powder was heated at 80°C for 1 hour and then dried in an oven at 120°C to give a spherical silicone rubber powder (B) that had an average particle size of 4 micrometers. Silicone rubber powder (B) had a JIS A durometer hardness of 25.

### Reference Example 3

A composition (V) was prepared by mixing the following to homogeneity: 28 weight parts of dimethylvinylsiloxy-endblocked dimethylpolysiloxane with a vinyl equivalent weight of 8,000 and 7 weight parts of dimethylhydrogensiloxy-endblocked dimethylsiloxane-methylhydrogensiloxane copolymer with a viscosity of 20 mPa.s (centipoise) having the following formula.

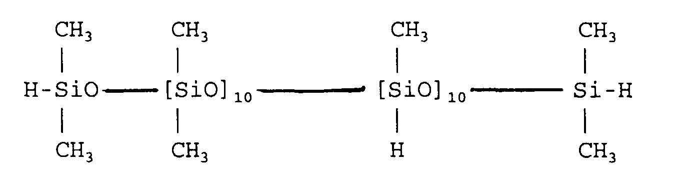

A composition (VI) was prepared by mixing the following to homogeneity: 33 weight parts of the above dimethylvinylsiloxy-endblocked dimethylpolysiloxane and isopropanolic chloroplatinic acid solution in sufficient quantity to give 20 weight-ppm of platinum metal per 100 weight parts of the dimethylvinylsiloxy-endblocked dimethylpolysiloxane.

Compositions (V) and (VI) were then mixed in their entirety to homogeneity at 5°C to give a silicone rubber composition, which was quickly mixed into an aqueous solution (25°C) of 200 weight parts of pure water (electrical conductivity = 0.2 microS/cm) and 4 weight parts of polyoxyethylene nonylphenyl ether (HLB = 13.1). Mixing this in a homogenizer (300 kgf/cm²) yielded a homogeneous waterborne emulsion of a silicone rubber composition. This waterborne emulsion was held at 30°C for 6 hours to effect cure and to give a waterborne dispersion of a silicone rubber powder. This dispersion was next heated at 80°C for 1 hour, and then dried in a spray dryer to give a spherical silicone rubber powder (C) that had an average particle size of 5 micrometers. Silicone rubber powder (C) had a JIS A durometer hardness of 40.

### Example 1

One hundred weight parts of the silicone rubber powder (A) of Reference Example 1 and 4 weight parts of microfine amorphous silica powder (specific surface area = 130 m²/g) were mixed for 20 minutes at 2,000 rpm in a Henschel ™ mixer to yield a composite silicone rubber powder (D) whose surface was coated with amorphous silica powder.

### Example 2

One hundred weight parts of the silicone rubber powder (A) of Reference Example 1 and 8 weight parts of microfine hydrophobic titanium oxide powder (surface treated with hexamethyldisilazane, particle size = 0.03 to 0.05 micrometer, specific surface area = 30 to 40 m²/g) were mixed as in Example 1 to yield a composite silicone rubber powder (E) whose surface was coated with hydrophobic titanium oxide powder.

### Example 3

One hundred weight parts of the silicone rubber powder (B) of Reference Example 2 and 4 weight parts of microfine amorphous silica powder (specific surface area = 130 m²/g) were mixed as in Example 1 to yield a composite silicone rubber powder (F) whose surface was coated with the microfine amorphous silica powder.

### Comparative Example 1

One hundred weight parts of the silicone rubber powder (C) of Reference Example 3 and 4 weight parts of microfine amorphous silica powder (specific surface area = 130 m²/g) were mixed as in Example 1 to yield a composite silicone rubber powder (G) whose surface was coated with the microfine amorphous silica powder.

### Comparative Example 2

One hundred weight parts of the silicone rubber powder (C) of Reference Example 3 and 5 weight parts of hydrophobic amorphous silica powder (surface treated with dimethyldichlorosilane, surface silanol density = 1.2/100 square angstroms, primary particle size = 16 millimicrons, specific surface area = 120 m²/g) were mixed as in Example 1 to yield a composite silicone rubber powder (H) whose surface was coated with the microfine hydrophobic amorphous silica powder.

**Table 1**

| | reference examples | | | examples of the invention | | | comp. examples | |
|---|---|---|---|---|---|---|---|---|
| silicone rubber powder | A | B | C | | | | | |
| composite silicone rubber powder | | | | D | E | F | G | H |
| average particle size in micrometers | 5 | 4 | 5 | 5 | 5 | 4 | 5 | 5 |
| flowability: weight% on mesh | >95 | >95 | >95 | <5 | <5 | <5 | <5 | <5 |
| water repellency | x | x | x | + | + | + | x | x |

## Claims

1. A method for preparation of a composite cured silicone powder, said method comprising mixing
(A) a cured silicone powder that has an average particle size of 0.1 to 100 micrometers and contains a non-crosslinking silicone oil with
(B) a microfine inorganic powder, having a particle size not exceeding one-thenth of the average particle size of the cured silicone powder, whereby said inorganic powder is coated on the surface of said cured silicone powder.

2. The method according to claim 1, wherein said microfine inorganic powder is a metal oxide.

3. The method according to claim 1, wherein said microfine inorganic powder has a specific surface area of at least 10 m²/g.

4. The method according to claim 1, wherein said cured silicone powder is silicone rubber powder.

5. The method according to claim 4, wherein said silicone rubber is polydimethylsiloxane and said non-crosslinking silicone oil is polydimethylsiloxane.

6. The method according to claim 5, wherein said silicone rubber is cured by an addition reaction.

7. A composite cured silicone powder obtainable by the process according to any of claims 1 to 6.

## Patentansprüche

1. Verfahren zur Herstellung eines gehärteten Siliconverbundpulvers, wobei dieses Verfahren umfasst: Mischen
(A) eines gehärteten Siliconpulvers, das eine mittlere Teilchengröße von 0,1 bis 100 µm aufweist und ein nichtvernetzendes Siliconöl enthält, mit
(B) einem mikrofeinen anorganischen Pulver mit einer Teilchengröße, die ein Zehntel der mittleren Teilchengröße des gehärteten Siliconpulvers nicht überschreitet, wobei dieses anorganische Pulver auf der Oberfläche dieses gehärteten Siliconpulvers beschichtet ist.

2. Verfahren nach Anspruch 1, wobei dieses mikrofeine anorganische Pulver ein Metalloxid ist.

3. Verfahren nach Anspruch 1, wobei dieses mikrofeine anorganische Pulver eine spezifische Oberfläche von wenigstens 10 m²/g aufweist.

4. Verfahren nach Anspruch 1, wobei dieses gehärtete Siliconpulver ein Siliconkautschukpulver ist.

5. Verfahren nach Anspruch 4, wobei dieser Siliconkautschuk Polydimethylsiloxan und dieses nichtvernetzende Siliconöl Polydimethylsiloxan ist.

6. Verfahren nach Anspruch 5, wobei dieser Siliconkautschuk durch eine Additionsreaktion gehärtet ist.

7. Gehärtetes Siliconverbundpulver, das nach dem Verfahren einer der Ansprüche 1 bis 6 erhältlich ist.

## Revendications

1. Procédé de préparation d'une poudre de silicone réticulée composite, ledit procédé comprenant l'étape consistant à mélanger
(A) une poudre de silicone réticulée qui a une granulométrie moyenne de 0,1 à 100 micromètres et contient une huile de silicone non réticulante avec
(B) une poudre minérale microfine, ayant une granulométrie ne dépassant pas un dixième de la granulométrie moyenne de la poudre de silicone réticulée, ladite poudre minérale étant déposée sur la surface de ladite poudre de silicone réticulée.

2. Procédé selon la revendication 1, dans lequel la poudre minérale microfine est un oxyde de métal.

3. Procédé selon la revendication 1, dans lequel la poudre minérale microfine a une surface spécifique d'au moins 10 m²/g.

4. Procédé selon la revendication 1, dans lequel ladite poudre de silicone réticulée est une poudre de caoutchouc de silicone.

5. Procédé selon la revendication 4, dans lequel ledit caoutchouc de silicone est un polydiméthylsiloxane et ladite huile de silicone non réticulante est un polydiméthylsiloxane.0.

6. Procédé selon la revendication 5, dans lequel ledit caoutchouc de silicone est réticulé par une réaction d'addition.

7. Poudre de silicone réticulée composite qui peut être obtenue par le procédé selon l'une quelconque des revendications 1 à 6.
